Europäisches Patentamt

(19) European Patent Office

Office européen des brevets

(11) Publication number : **0 259 322**
**B1**

(12) **EUROPEAN PATENT SPECIFICATION**

(45) Date of publication of patent specification :
15.03.89

(51) Int. Cl.⁴ : **E 06 B 7/16**

(21) Application number : 86902955.3

(22) Date of filing : 07.05.86

(86) International application number :
**PCT/SE 86/00214**

(87) International publication number :
**WO/8606783 (20.11.86 Gazette 86/25)**

(54) **ARRANGEMENT FOR AIR CONTROL.**

(30) Priority : 07.05.85 SE 8502222

(43) Date of publication of application :
16.03.88 Bulletin 88/11

(45) Publication of the grant of the patent :
15.03.89 Bulletin 89/11

(84) Designated contracting states :
**AT BE CH DE FR GB IT LI LU NL SE**

(56) References cited :
US--A-- 3 254 457
US--A-- 3 685 794
US--A-- 3 912 223
US--A-- 4 044 510

(73) Proprietor : **CRAWFORD DOOR PRODUCTION AB**
**Box 160**
**S-423 01 Torslanda (SE)**

(72) Inventor : **ANDERSSON, Thomas**
**Pl. 6852**
**S-440 33 Harestad (SE)**

(74) Representative : **Grams, Klaus Dieter, Dipl.-Ing. et al**
**Patentanwaltsbüro Tiedtke-Bühling-Kinne- Grupe-**
**Pellmann-Grams-Struif Winter-Roth Bavariaring 4**
**D-8000 München 2 (DE)**

Jouve, 18, rue St-Denis, 75001 Paris, France

## Description

The present invention relates to an arrangement for air control in chambers capable of being inflated against the effect of a flexible force, such as seals which are intended to be inflated at loading bay openings and similar and to be brought into contact with a vehicle parked at the opening or driven partly into the opening so as to provide a seal against the vehicle.

The invention is intended first and foremost to be applied in conjunction with entrance seals installed at loading bay openings (eg. US-A-4,044,510) and similar. Entrance seals of this kind more often than not consist of one or more air chambers resembling bellows suspended around the loading bay opening in question, into the interior of which air is blown preferably by means of a low-pressure fan, thereby causing the seal to inflate in a direction away from the edge of the loading bay opening and towards a vehicle situated at the opening or driven partly into the opening. The fan is usually caused to operate for as long as it is wished to maintain the seal between the edge of the loading bay opening and the vehicle. When it is wished for the seal to cease so as to permit the vehicle to be driven away, the fan is usually switched off, and the air chamber is emptied of air by means of flexible compressing devices, the forces of which acting upon the seal are such that they will displace the seal towards its compressed position when the effect of the fan ceases, but that the force generated by the fan will exceed the compressing force when the fan is operating.

The object of the invention is to provide an arrangement for air control in conjunction with the inflation and evacuation of the seal, which is of the simplest possible design and yet is reliable and inexpensive to manufacture. The wish is to achieve through the invention an arrangement for the air control which exhibits a control system which is as simple as possible, with the smallest possible number of sensors and operating controls.

This is achieved by an air control arrangement in accordance with the invention which is characterized essentially in that there discharges into the internal cavity of the inflatable chamber a large-section channel containing a damper so arranged as to bring the inside of the air chamber into open communication with an inlet channel containing a fan, preferably of the low-pressure type, for the purpose of inflating the chamber, and alternately with the atmosphere for the purpose of evacuating the chamber, for which purpose the damper is controlled in such a way by the air flow of the fan that it is caused to change over to the position which interrupts the open communication between the inside of the chamber and the atmosphere as the fan approaches its operating speed, usually its maximum speed, in this way opening the communication via the fan for the purpose of inflating the chamber, and vice versa, i. e. to change over to the position which opens up the communication between the air chamber and the atmosphere as the speed of the fan decreases.

An illustrative embodiment of the object of invention is described in the following with reference to the accompanying drawings, in which :

Fig. 1 shows an air control arrangement executed in accordance with the invention in its inactive mode, i. e. in a position in which the air fan is stationary and the communication between one element, for example an inflatable entrance seal to which the air control arrangement is connected, and the atmosphere is open ; and

Fig. 2 shows the same air control arrangement in its operating mode, in which the fan is forcing air into the air channel in question.

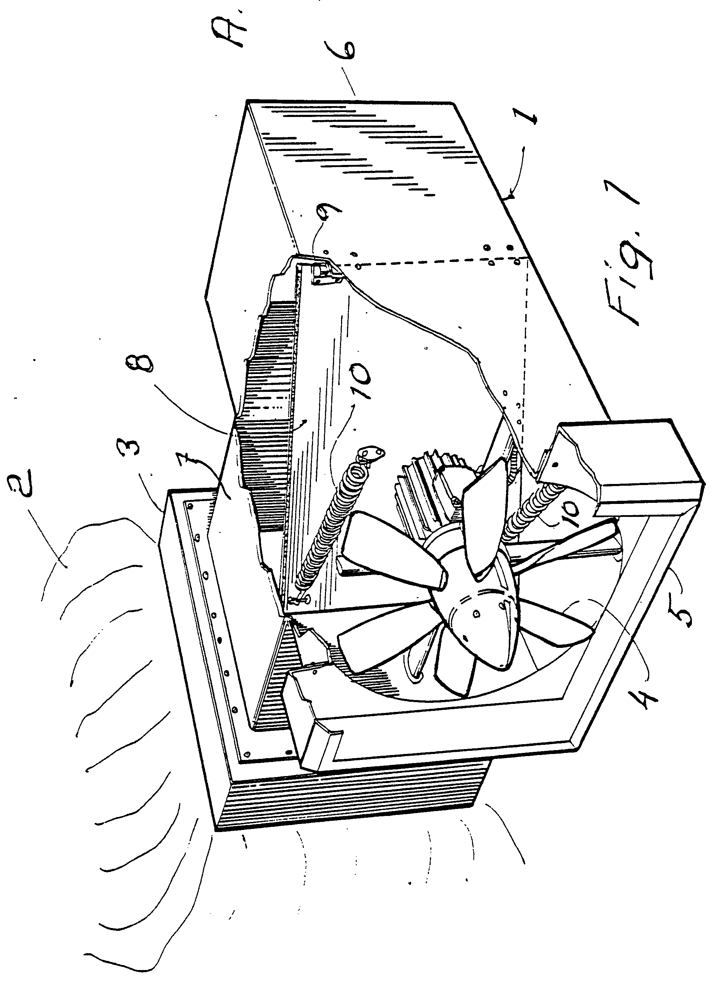

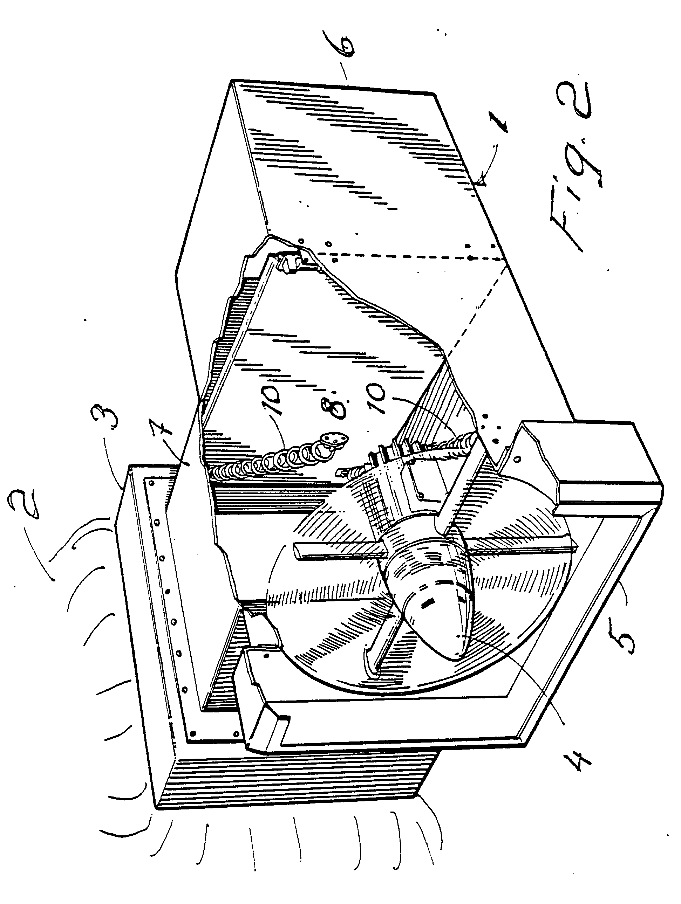

The designation 1 is used in the drawings in respect of the air control arrangement as a whole, which is connected to an air chamber 2 via a connecting flange 3 or similar. The air control arrangement consists of an essentially « T »-shaped pipe, the part of which corresponding to the cross-piece of the « T » consists of an inlet connection 5 and an outlet connection 6, whilst the component which corresponds to the upright of the « T » and is identified by the designation 7 forms a communication between the interior of the housing 1 and the air chamber 2. The designation 8 is applied to a damper which is pivotally attached by means of articulations 9 resembling hinges to that wall of the housing 1 which is situated opposite the communication connection 7. The damper 8 is acted upon by two tensioning springs 10 which extend between the damper 8 and the wall of the housing and which attempt to hold the damper in the position illustrated in Fig. 1, in which the communication between the connections 7 and 6 is open, i. e. the communication between the interior of the air chamber 2 and the atmosphere A is open, whilst the communication between the inlet connection 5 and the communication connection 7 is closed. When the fan 4 is rotating at its operating speed, the force of the air flow generated by the fan will overcome the force of the springs 10, causing the damper flap 8 to swing over into the position illustrated in Fig. 2, in so doing interrupting the communication between the communication connection 7 and the outlet connection 6, whilst the communication between the inlet connection 5 and the communication connection and thus the interior of the air chamber 2 is open instead. The housing 1 should preferably exhibit a comparatively large internal cross-section, so that both the air which is forced in by the fan 4 and the air which flows out of the air chamber 2 are able to pass through the housing 1 with low resistance.

When it is wished to fill the air chamber 2 with air, the fan 4 is started up, and the pressure of the air flow will cause the damper flap 8 to swing from the inactive position shown in Fig. 1 against the effect of the springs 10 into the position shown in Fig. 2, in which the communication between the inlet connection 5 and the interior of the air chamber 2 via the communication connection 7 is opened. The fan 4 should preferably be left running for as long as it is wished to keep the air chamber 2 inflated, i. e. in the case of a seal at a loading bay door for as long as it is wished to maintain the seal between the edges of the loading bay opening and the vehicle which is to be loaded and/or unloaded. The tension of the springs 10 should preferably be so dimensioned as to enable them to cause the damper flap 8 to swing back into the position shown in Fig. 1 as soon as the speed of the fan decreases and the pressure of the air flow produced by the fan against the damper flap 8 falls. When it is no longer wished to maintain the pressure inside the air chamber 2, i. e. in the case of a seal at loading bay openings when it is wished to permit the seal against the vehicle to cease so that the vehicle can be driven away, the power supply to the fan is interrupted, then the damper flap 8 will immediately swing over into the position shown in Fig. 1 and in so doing will open fully the communication between the inside of the air chamber 2 and the atmosphere A. What this means is that air will be able to flow more or less immediately from the inside of the air chamber 2, i. e. whilst the fan is still rotating at a comparatively high speed. It is thus possible, by using the air control arrangement in accordance with the invention, for both the inflation of the air chamber 2 and the evacuation of same to take place rapidly and efficiently using a single fan and with extremely simple control and monitoring devices, all that is required for the inflation and evacuation of the air chamber being simply the respective closing and opening of the power circuit to the fan motor in question. In the illustrative embodiment shown here the force which attempts to move the damper flap 8 into the position shown in Fig. 1 is provided by springs. It is also possible, of course, within the context of the invention, for this force to be provided by other means, such as cables with weights attached, lever arms and similar. The damper illustrated here is mounted in an articulation 9, but it is also possible, of course, within the context of the invention, for the damper to be capable of parallel displacement along the inlet and outlet connections 5 and 6 from one side to the other of the orifice of the communication connection 7 which discharges into the interior of the housing 1. The housing 1 is shown in the drawings to have rectangular cross-section, although it can, of course, have some other cross-sectional form within the context of the invention. Neither is it necessary to arrange the fan 4 directly inside the housing 1. This can, of course, be situated at some other point in a line connected to the inlet connection 5. The springs 10 may be adjustable with regard to their spring tension in order to permit the appropriate variation of the flexible forces acting upon the damper flap 8. Similarly, the speed of the fan drive motor may also be variable. In the embodiment illustrated here the side walls of the communication connection constitute stops for the swinging end of the damper plate 8 at its discharge opening into the housing 1, although these stops may, of course, also be executed in some other way, for example inside the inlet connection 5 and the outlet connection 6.

The invention is not restricted to the examples described above and illustrated in the drawings, but may be varied with regard to its detailed aspects within the context of the following Patent Claims without in any way departing from the underlying idea of invention.

## Claims

1. An arrangement for air control in air chambers (2) capable of being inflated against the effect of a flexible force, such as seals which are intended to be inflated at loading bay openings and similar and to be brought into contact with a vehicle parked at the opening or driven partly into the opening so as to provide a seal against the vehicle, characterized in that there discharges into the internal cavity of the air chamber (2) a large-section channel containing a damper (8) so arranged as to bring the inside of the air chamber (2) into open communication with an inlet channel containing a fan (4), preferably of the low-pressure type, for the purpose of inflating the air chamber (2), and alternately with the atmosphere for the purpose of evacuating the air chamber, for which purpose the damper (8) is controlled in such a way by the air flow of the fan that it is caused to change over to the position which interrupts the open communication between the inside of the air chamber (2) and the atmosphere as the fan approaches its operating speed, in this way opening the communication via the fan for the purpose of inflating the air chamber, and vice versa, i. e. to change over to the position which opens up the communication between the air chamber and the atmosphere as the speed of the fan decreases.

2. An arrangement according to Patent Claim 1, characterized in that the damper (8) consists of a blade which, in its two working positions, is arranged essentially transversely in relation to the air flow from the fan.

3. An arrangement according to Patent Claim 2, characterized in that the damper blade (8) is arranged inside a an essentially « T »-shaped channel section, in which case the inlet and outlet units (5 and 6) are arranged essentially in line with one another, forming the cross-piece of the « T », whilst the connection (7) to the air chamber (2) extends essentially in a transverse direction to the former, forming the upright of the « T », in conjunction with which the damper blade (8) is free to move inside said inlet and outlet units (5 and 6) from one side to the other of the discharge opening of the connection (7) to the air chamber (2) into said inlet and outlet units.

4. An arrangement according to Patent Claim 3, characterized in that the damper (8) is subjected to a constant load by a flexible force which attempts to move the damper in a direction towards the fan (4), i. e. into its evacuation position, said force being balanced in such a way, however, that it is less than the pressure of the incoming air flow from the fan acting upon the damper in the opposite direction as the speed of the fan approaches its full operating level, i. e. the damper is retained in the inflating position as the fan approaches its operating speed, and vice versa as the speed of the fan is reduced, i. e. the damper is then retained in the evacuation position.

5. An arrangement according to any of the Patent Claims 2-4, characterized in that the flexible force acting on the damper is a spring force.

6. An arrangement according to any of the Patent Claims 3-5, characterized in that the damper (8) is in the form of a plate supported on hinges on the wall of a housing (1) constituting said inlet and outlet elements (5 and 6) opposite said connection (7) to the air chamber (2).

7. An arrangement according to Patent Claim 6, characterized in that the lateral sections of the orifice of said connection (7) serve as end stops for the damper plate (8).

8. An arrangement according to Patent Claim 7, characterized in that the housing (1) containing the damper plate (8) exhibits rectangular cross-section, and in that the damper plate similarly exhibits rectangular form.


## Patentansprüche

1. Anordnung zur Luftsteuerung in Luftkammern (2), die entgegen der Wirkung einer flexiblen Kraft aufblasbar sind, wie Dichtungen, die an Laderampenöffnungen oder dergleichen aufgeblasen und mit einem an die Öffnung angestellten oder zum Teil in die Öffnung eingefahrenen Fahrzeug in Berührung gebracht werden sollen, so daß sich eine Dichtung gegenüber dem Fahrzeug ergibt, dadurch gekennzeichnet, daß in die innere Höhlung der Luftkammer (2) ein Kanal großen Querschnitts mündet, der eine Luftklappe (8) enthält, die derart gestaltet ist, daß sie für das Aufblasen der Luftkammer (2) das Innere der Luftkammer (2) in offene Verbindung mit einem ein Gebläse (4), vorzugsweise ein Niederdruckgebläse enthaltenen Einlaßkanal oder alternativ für das Entleeren der Luftkammer mit der Außenluft in offene Verbindung bringt, wobei zu diesem Zweck die Luftklappe (8) durch den Luftstrom des Gebläses derart gesteuert ist, daß dieser eine Umstellung in die Stellung, bei der die offene Verbindung zwischen dem Inneren der Luftkammer (2) und der Außenluft unterbrochen ist, sobald das Gebläse seiner Betriebsdrehzahl nahe kommt, wodurch auf diese Weise die Verbindung über das Gebläse für das Aufblasen der Luftkammer geöffnet wird, und umgekehrt herbeiführt, nämlich eine Umstellung in die Stellung, bei der die Verbindung zwischen der Luftkammer und der Außenluft geöffnet ist, sobald die Drehzahl des Gebläses abnimmt.

2. Anordnung nach Patentanspruch 1, dadurch gekennzeichnet, daß die Luftklappe (8) aus einem Flügel besteht, der in seinen beiden Arbeitsstellungen in Bezug auf die Luftströmung aus dem Gebläse im wesentlichen quer angeordnet ist.

3. Anordnung nach Patentanspruch 2, dadurch gekennzeichnet, daß der Luftklappenflügel (8) innerhalb eines im wesentlichen T-förmigen Kanalabschnitts angeordnet ist, wobei eine Einlaß- und Auslaßeinheit (5 und 6) im wesentlichen auf einer Linie zueinander angeordnet sind, die den Querbalken des « T » bildet, während sich der Anschluß (7) zu der Luftkammer (2) im wesentlichen in Querrichtung zu der Linie erstreckt und die senkrechte Linie des « T » bildet, in Bezug auf die der Luftklappenflügel (8) innerhalb der Einlaß- und Auslaßeinheiten (5 und 6) von einer zur anderen Seite der Mündungsöffnung des Anschlusses (7) zu der Luftkammer (2) in die Einlaß- und Auslaßeinheit frei bewegbar ist.

4. Anordnung nach Patentanspruch 3, dadurch gekennzeichnet, daß die Luftklappe (8) einer konstanten Belastung durch eine elastische Kraft ausgesetzt ist, die bestrebt ist, die Luftklappe in einer Richtung zu dem Gebläse (4) hin zu bewegen, nämlich in deren Entleerungsstellung, wobei die Kraft jedoch in der Weise ausgewogen ist, daß sie geringer als der Druck der von dem Gebläse her ankommenden, auf die Luftklappe in der Gegenrichtung wirkenden Luftströmung ist, sobald die Drehzahl des Gebläses dessen vollem Betriebswert nahekommt, nämlich die Luftklappe in der Aufblasestellung gehalten wird, sobald das Gebläse seiner Betriebsdrehzahl nahekommt, und umgekehrt, sobald die Drehzahl des Gebläses absinkt, nämlich die Luftklappe dann in der Entleerungsstellung gehalten wird.

5. Anordnung nach irgendeinem der Patentansprüche 2 bis 4, dadurch gekennzeichnet, daß die an der Luftklappe wirkende elastische Kraft eine Federkraft ist.

6. Anordnung nach irgendeinem der Patentansprüche 3 bis 5, dadurch gekennzeichnet, daß die Luftklappe (8) die Form einer Platte hat, die gegenüber dem Anschluß (7) zur Luftkammer (2) an Scharnieren an der Wand eines Gehäuses (1) gelagert ist, das die Einlaß- und Auslaßelemente (5 und 6) bildet.

7. Anordnung nach Patentanspruch 6, dadurch gekennzeichnet, daß die seitlichen Abschnitte der Öffnung des Anschlusses (7) als Endanschläge für die Luftklappenplatte (8) dienen.

8. Anordnung nach Patentanspruch 7, dadurch gekennzeichnet, daß das die Luftklappenplatte (8) enthaltende Gehäuse (1) einen Rechteckquerschnitt hat und daß die Luftklappenplatte gleichermaßen Rechteckform hat.


## Revendications

1. Agencement pour la commande de l'air dans des chambres pneumatiques (2) pouvant être gonflées à l'encontre de l'effet d'une force flexible, telle que des joints destinés à être gonflés dans les ouvertures d'une aire de chargement, etc., et à être mis en contact avec un véhicule immobilisé à l'ouverture ou entraîné partiellement dans l'ouverture de manière à fournir un joint contre le véhicule, caractérisé en ce que débouche dans la cavité interne de la chambre pneumatique (2), un canal de grande section contenant un volet (8) disposé de façon à mettre l'intérieur de la chambre pneumatique (2) en communication ouverte avec un canal d'admission contenant un ventilateur (4), de préférence du type basse pression, dans le but de gonfler la chambre pneumatique (2), et alternativement, avec l'atmosphère afin d'évacuer la chambre pneumatique, but pour lequel le volet (8) est commandé par le courant d'air du ventilateur d'une façon telle qu'il est amené à passer à la position qui provoque l'interruption de la communication ouverte entre l'intérieur de la chambre pneumatique (2) et l'atmosphère alors que le ventilateur se rapproche de sa vitesse de fonctionnement, ouvrant de cette façon la communication via le ventilateur dans le but de gonfler la chambre pneumatique et vice versa, c'est-à-dire pour passer à la position qui ouvre la communication entre la chambre pneumatique et l'atmosphère alors qu'il y a diminution de la vitesse du ventilateur.

2. Agencement selon la revendication 1, caractérisé en ce que le volet (8) est constitué d'une pale qui, dans ses deux positions de travail, est disposée en relation essentiellement transversale avec le courant d'air provenant du ventilateur.

3. Agencement selon la revendication 2, caractérisé en ce que la pale (8) du volet est disposée à l'intérieur d'une section en canal ayant essentiellement la forme d'un « T » auquel cas, les ensembles d'admission et de sortie (5 et 6) sont placés essentiellement suivant la même ligne, formant la barre de traverse du « T », alors que la liaison (7) avec la chambre pneumatique (2) s'étend essentiellement dans une direction transversale à la première, formant le jambage du « T », en conjonction avec quoi, la pale (8) du volet peut se déplacer à l'intérieur des ensembles d'admission et de sortie (5 et 6) entre un côté et l'autre de l'ouverture de décharge de la connexion (7) entre la chambre pneumatique (2) et les ensembles d'admission et de sortie.

4. Agencement selon la revendication 3, caractérisé en ce que le volet (8) est soumis à une charge constante par une force flexible qui essaie de déplacer le volet dans la direction du ventilateur (4) c'est-à-dire dans sa position d'évacuation, la force étant équilibrée d'une façon telle que, cependant, elle soit inférieure à la pression du courant d'air entrant en provenance du ventilateur agissant sur le volet dans la direction opposée lorsque la vitesse du ventilateur se rapproche de sa pleine vitesse de fonctionnement, c'est-à-dire que le volet est maintenu dans la position de gonflage alors que le ventilateur se rapproche de sa vitesse de fonctionnement et vice versa alors que la vitesse du ventilateur est réduite, c'est-à-dire que le volet est alors maintenu dans la position d'évacuation.

5. Agencement selon l'une quelconque des revendications 2 à 4, caractérisé en ce que la force flexible agissant sur le volet est la force d'un ressort.

6. Agencement selon l'une quelconque des revendications 3-5, caractérisé en ce que le volet (8) se présente sous la forme d'une plaque supportée sur des gonds sur la paroi d'un logement (1) constituant les éléments d'admission et de sortie (5 et 6) opposés à la connexion (7) avec la chambre pneumatique (2).

7. Agencement selon la revendication 6, caractérisé en ce que les sections latérales de l'orifice de la connexion (7) servent de butées d'extrémité pour la plaque (8) du volet.

8. Agencement selon la revendication 7, caractérisé en ce que le logement (1) contenant la plaque (8) du volet a une section en coupe rectangulaire, et en ce que la plaque du volet a de même la forme d'un rectangle.

Fig. 1

EP 0 259 322 B1

Fig. 2

EP 0 259 322 B1